# EUROPEAN PATENT APPLICATION

(11) **EP 0 994 596 A2**
(43) Date of publication of application: **19.04.2000**
(21) Application number: 99120271.4
(22) Date of filing: 11.10.1999
(51) Int. Cl.: H04L 1/18, H04B 7/24

(54) **Digital data bi-directional communication method and apparatus**

(30) Priority: 11.10.1998 IL 12654098
(71) Applicant: Tadiran Spectralink Ltd., Holon, 58101 (IL)
(72) Inventor: Yadgar, Yichak, Ra'anana (IL); Halavy, Moshe, Shoham (IL); Malcai, Gad, Rishon Le-Zion 75881 (IL)
(74) Representative: Popp, Eugen, Dr.

(57) **Abstract**

Apparatus and a method of bi-directional communication of digital data between a plurality of remote users and a base station using a shared communication channel and a time-division protocol in which the communication time is divided into a plurality of time slots is provided. The method includes transmitting packets of data according to a TDMA (Time Division Multiple Access) protocol in which each user is allocated a dedicated time slot in the shared communication channel; and transmitting other packets of data according to a time-division ALOHA protocol in which each user is allocated a time slot in the shared communication channel on an "as needed" basis, competing with other users for access to the shared communication channel, and subsequently re-transmits those packets of data where no acknowledgement is received until an acknowledgement is received.

## Description

### FIELD AND BACKGROUND OF THE INVENTION

The present relates to a method and apparatus of bi-directional communication of digital data between a plurality of remote users and a base station using a shared communication channel. The invention is particularly useful in a fuel dispensing system wherein the remote users are nozzle devices attached to nozzles of fuel dispensers at a gasoline station in an automatic-charge refueling system; and the invention is therefore described below with respect to this application.

Automatic-charge refueling systems are known which include a vehicle unit attached to each vehicle for automatically identifying the vehicle, and a nozzle device attachable to each fuel dispensing nozzle for providing bi-directional communication between the vehicle unit and a base station site controller at the gasoline station. The systems now used, however, include a cable connection from each nozzle device to the site controller. Such systems, therefore, require many cables to be laid upon the initial installation of the system, as well as upon any subsequent expansion or change in the installation. The laying of such cables is a cumbersome and expensive process, frequently requiring the authorization and approval of competent authorities.

### OBJECTS AND BRIEF SUMMARY OF THE INVENTION

An object of the present invention is to provide a novel method and apparatus for the bi-directional communication of digital data using a shared communication channel. Another object of the invention is to provide such a method and apparatus which are particularly useful in an automatic-charge refueling system utilizing a wireless communication channel, but which may also be used in other systems, particularly other point-of-sale systems to effect communication between a plurality of users and a base station at a local area or site via a wireless communication channel.

According to one aspect of the present invention, there is provided a method of bi-directional communication of digital data between a plurality of remote users and a base station using a shared communication channel and a time-division protocol in which the communication time is divided into a plurality of time slots, comprising: transmitting packets of data according to a TDMA (Time Division Multiple Access) protocol in which each user is allocated a dedicated time slot in the shared communication channel; and transmitting other packets of data according to a time-division ALOHA protocol in which each user is allocated a time slot in the shared communication channel on an "as needed" basis, competing with other users for access to the shared communication channel, and subsequently re-transmits those packets of data where no acknowledgement is received until an acknowledgement is received.

According to further features in the described preferred embodiment, the data packets transmitted according to a TDMA protocol are of relatively uniform lengths among the users, and the data packets transmitted according to a time division ALOHA protocol are of relatively non-uniform lengths among the users. If there is more information to be transmitted than the capacity of a time slot, this information will be divided up to one or more additional time slots.

According to a still further feature in the described preferred embodiment described below, the data packets transmitted according to the time-division ALOHA protocol are transmitted according to a slotted ALOHA protocol in which each transmission is at the beginning of a time slot in the shared communication channel.

According to still further features, in the described preferred embodiment, the data transmissions are in frames each including; a plurality of time slots for transmitting data, and at least one sync slot for synchronizing the transmission between the user and the base station.

More particularly, the shared communication channel is a wireless channel, and the data transmissions are according to a frequency-hopping system, each of said frames further including a control slot for specifying the frequencies of the following frames.

According to still further features in the described preferred embodiment, each frame is divided into a plurality of miniframes, each miniframe including: an uplink data slot for use by a user to transmit data to the base station; a downlink data slot for use by the base station to transmit data to a user; and an ACK slot for acknowledging receipt of an uplink transmission during the preceding miniframe. In the described embodiment, the uplink and downlink data slots are allocated to the user on an "as needed" basis according to the Slotted ALOHA time-division protocol, for transmitting variable length data packet. Each miniframe further includes a slow uplink data slot and a slow downlink data slot allocated to the users on a "dedicated" basis according to the TDMA protocol for transmitting fixed-length data packets.

As will be described more particularly below, such a bi-directional communication method and apparatus may be implemented in a wireless shared communication channel to provide a high capacity for handling data from a large number of users simultaneously despite variations in traffic volume and with minimal information delays in both directions. Such advantages make the method and system particularly useful in an automatic-charge refueling system having a large number of nozzle units and a wireless communication channel between the nozzle units and the base station, but the invention could be used in many other applications.

Further features and advantages of the invention will be apparent from the description below.

### BRIEF DESCRIPTION OF DRAWINGS

The invention is herein described, by way of example only, with reference to the accompanied drawings, wherein:
FIG. 1 is a block diagram illustrating one form of automatic-charge refueling system constructed in accordance with the present invention;
FIG. 2 is a broad block diagram, and FIG. 3 is a more detailed block diagram, of the remote nozzle unit in the system of FIG. 1;
FIG. 4 is a broad block diagram, and FIG. 5 is a more detailed block diagram, of the HUB base station in the system of FIG. 1;
FIG. 6 illustrates the frame structure of the digital data transmissions in the system of FIGS. 1 - 5;
FIG. 7 illustrates the synchronization process in the system of FIGS. 1-5;
FIG. 8 is a flow chart illustrating the operation of the remote nozzle unit; and
FIG. 9 illustrates another point-of-sale system constructed in accordance with the present invention.

### DESCRIPTION OF A PREFERRED EMBODIMENT

### Overall System

The preferred embodiment of the invention illustrated in the drawings is an automatic-charge refueling system for installation in gasoline stations in order to automatically identity the vehicles as they are being fuelled and to charge the users by directly charging their bank account. The illustrated system may provide other accounting services if desired. An important feature of the refueling system illustrated in the drawings is that it utilizes a wireless communication channel between the nozzle units and a HUB base station at the site, thereby obviating the need for laying cables whenever an installation is initially made or subsequently changed.

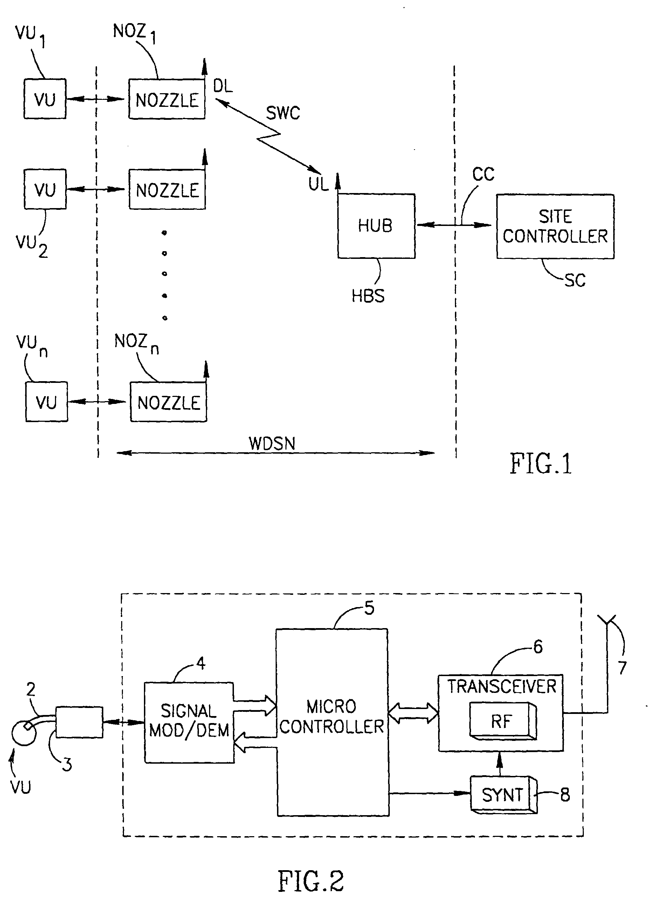

The automatic-charge refueling system illustrated in FIG. 1 comprises a site controller SC located in the respective gasoline station, communicating with a plurality of remote nozzle units NOZ₁ ------ NOZₙ, each attached to one of the fuelling nozzles in the gasoline station and adapted to be coupled to a vehicle unit VU₁ ------ VUₙ, attached to the vehicle to be refueled. Such systems are known in which the vehicle unit attached to the respective vehicle transmits, via the nozzle unit attached to the respective nozzle, data identifying the vehicle, (e.g., for prior credit approval); and the site controller SC processes the information regarding the quantity of fuel pumped to the respective vehicle, e.g.. and may transmit this information to the vehicle via the respective vehicle unit and nozzle unit. In such known systems, the nozzles are all wire-connected to the site controller SC to provide this two-way communication.

In The system illustrated in FIG. 1, however, there are no wire connections between the nozzle units NOZ₁------NOZₙ to the site controller SC; rather, the gasoline station is provided with a HUB base station HBS, which is wire-connected via cables CC to the site controller SC, but which communicates with all the nozzle units using a shared wireless communication channel, indicated by arrow SWC in FIG. 1, and a time-division protocol in which the communication time is divided into a plurality of time slots.

Many such time-division protocols are known. In one, called the TDMA (Time Division Multiple Access) protocol, each user is allocated a dedicated time slot in the shared wireless channel SWC for transmitting and receiving its data. Such a protocol is particularly advantageous where the data throughout is relatively constant for each user.

Another known time-division protocol, called ALOHA, allocates a time slot in the shared wireless channel SWC to each user on an "as needed" basis; that is, each user competes with the others for access to the shared wireless channel. In the event of collision between users attempting to occupy the same time slot, the date of transmission will not be effected from either user, and therefore it is necessary in this protocol to receive an acknowledgement (ACK) after each transmission. If no ACK has been received, the data is retransmitted, in a random manner, until a proper ACK is received.

Also known is modification to the above-described ALOHA time-division protocol called Slotted ALOHA, in which each user is allocated a time slot also on an "as needed" basis, but each transmission must be at the beginning of a time slot. While this protocol reduces the number of collisions, there still may be collisions between competing users attempting to occupy the same time slot, and therefore if an ACK signal is not received, the data is retransmitted in a random manner until an ACK signal is received.

As will be described more particularly below, an important feature of the system illustrated in the drawings is that the system uses the TDMA protocol for transmitting certain data packets where the data packets are relatively uniform in length and the Slotted ALOHA protocol for other data packets where the data packets are relatively non-uniform in length. As will be described more particularly below, such a combination of protocols increases the data handling capacity of the system and also reduces the response time.

According to another feature of the illustrated system, as will be described below, the data transmissions are according to a frequency-hopping arrangement, which substantially increases the immunity of the system from outside interferences. Also the data transmissions are in frames divided into a plurality of miniframes, which provide fast system response. The communication slots are designed to accomplish synchronization at frame level and to ensure proper data transmission.

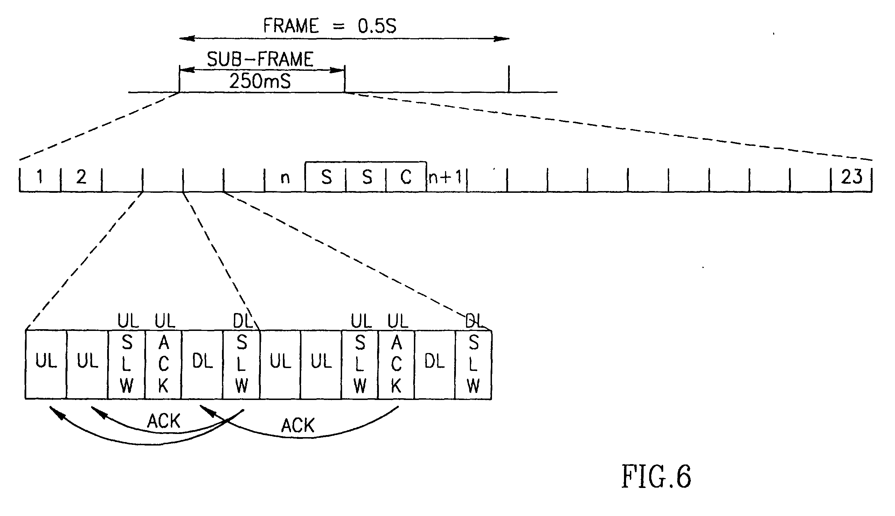

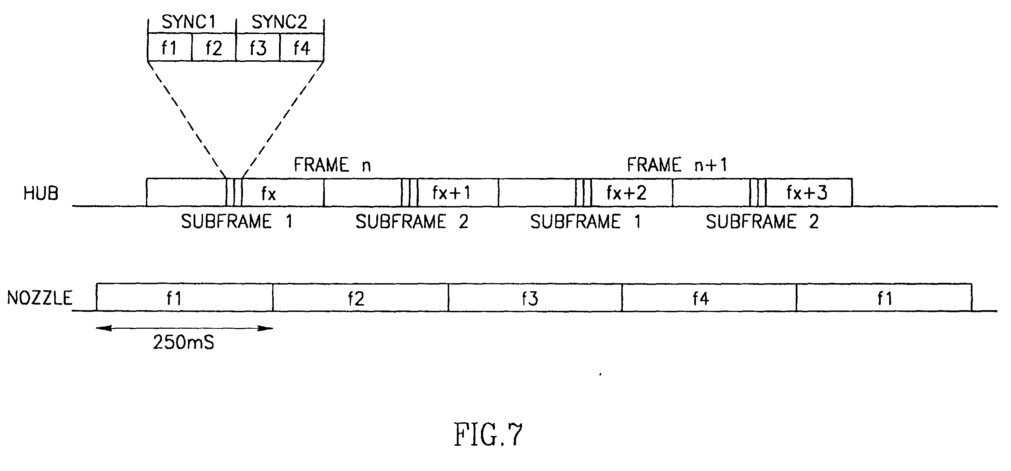

The foregoing features are described more particularly below especially with reference to the frame structure illustrated in FIG. 6 and the synchronization process illustrated in FIG. 7.

### The Nozzle Units

Each nozzle unit NOZ, as illustrated in FIG. 2, is mounted in any convenient manner to its respective fluid dispensing nozzle, shown at 2 in FIG. 2, such that an antennas 3 carried by the nozzle unit is inductively coupled to the vehicle unit VU for the vehicle being refueled, as now done in the commercially available systems. Each nozzle unit includes a signal modulator / 4 which communicates with a microcontroller 5 also included in the nozzle unit, Microcontroller 5 is connected to an RF transceiver 6 having an antenna 7 which communicates with antenna 8 (FIG. 1) of the HUB base station HBS to provide bi-directional communication using the shared wireless channel SWC. The nozzle unit NOZ further includes a digital synthesizer 8 to generate frequencies for the frequency hopping mechanism to be described below.

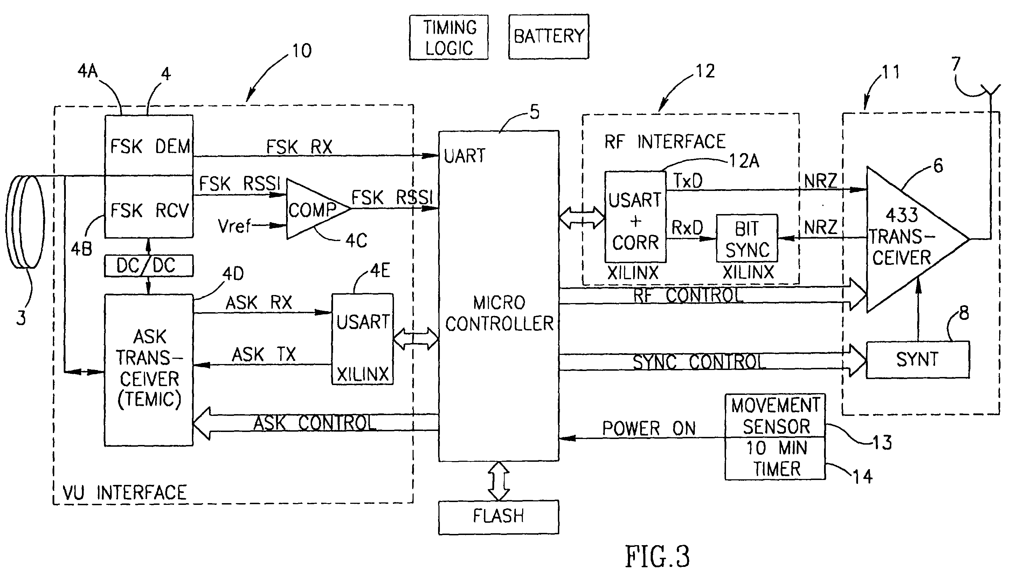

FIG. 3 more particularly illustrates the construction of each of the nozzle units NOZ. Those components within the vehicles unit VU interface section are enclosed by box 10; those components within the RF section are enclosed by box 11; and those components within the RF interface section are enclosed by box 12.

Thus, the signal modulator / de-modulator 4 within the VU interface box 10, includes an FSK demodulator 4a, which demodulates the FSK received signal and transfers it to the microcontroller 5; and an FSK receiver 4b, which generates the RSSI (Received Signal Strength Indication) signal according to the VU signal strength. This signal imputed into a comparator 4c and is compared with a reference to assure that the fuel nozzle is inserted into the gas tank of the vehicle being refueled, and the signal is continuously being received by the nozzle.

Signal modulator / de-modulator 4 further includes an ASK transceiver 4d which transmits ASK data to the vehicle unit VU and receives data from the VU vehicle unit A USART (Universal Synchronous Asynchronous Receiver Transmitter) 4e communicates with the ASK transceiver 4d and decodes the Manchester coded information before communicated to the microcontroller 5.

Microcontroller 5 controls and operates all procedures of the nozzle unit NOZ on the refueling nozzle, communicates with the vehicle unit (VU) of the vehicle being refueled, and builds the RF communication frame. As an example, it may be a Dallas DS80C323 microcontroller.

The RF section, within box 11 in FIG. 3, includes the transceiver 6 which is used to transmit and receive the information from the HUB base station HBS (FIG. 1) at a mains frequency of 433 MHz, with FSK modulation. This section also includes a digital synthesizer 8 which is used to generate frequencies for the frequency hopping mechanism,

The RF interface within box 12 includes a USART 12a which provides serial synchronous communication with the RF section 11 and includes a correlater which checks for an identical correlation pattern at the protocol slots to achieve frame synchronization.

As will be described more particularly below, the nozzle unit NOZ is normally in a Sleep mode, but can receive a wake-up signal from two sources. One source is a movement sensor 13 which senses when the nozzle has been removed from its normal holder on The fuel pump to wake-up the nozzle unit NOZ from its sleep mode. The other source is a periodic timer 4c, e.g., a ten minute timer, which provides a wake-up signal to the nozzle every 10 minutes of idle time to cause it to send an "alive signal" to the HUB base station HBS (FIG. 1).

### The Hub Base Station

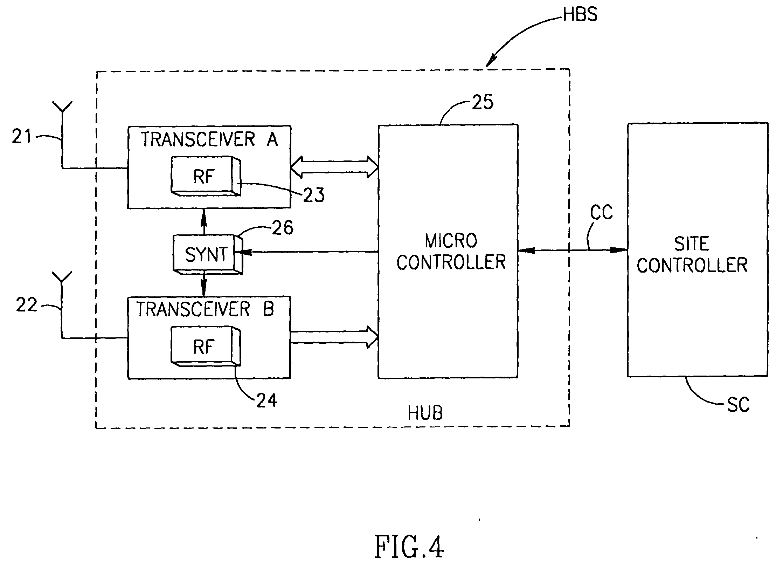

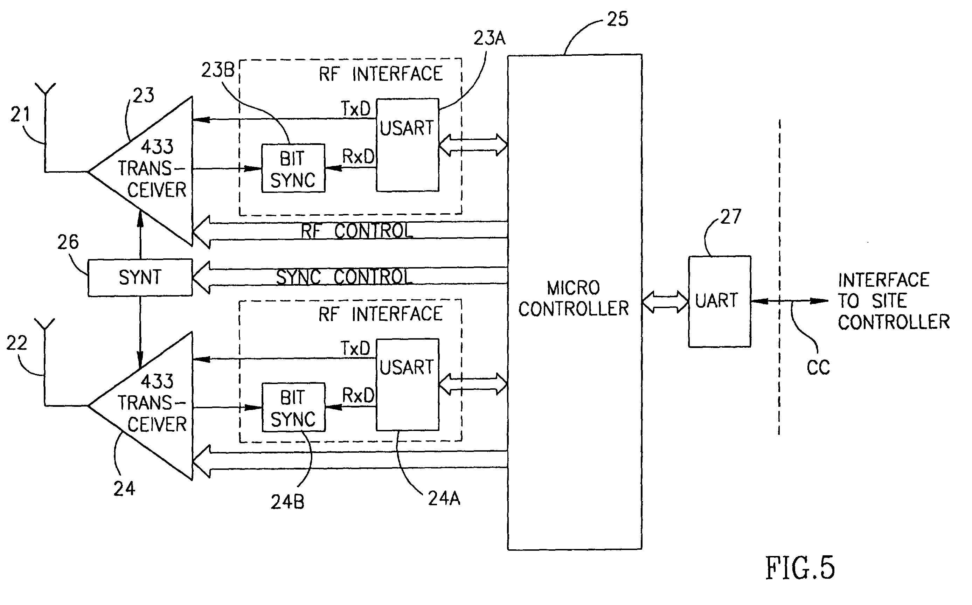

FIG. 4 broadly, and FIG. 5 more particularly, illustrate the construction of the HUB base station HBS. As described earlier with respect to FIG. 1, it provides bi-directional communication between the nozzles NOZ coupled to the vehicle unit VU on the one hand, and the site controller SC of the gasoline station on the other hand. Communication with the nozzles is via the shared wireless channel SWC (FIG. 1) according to a time-division protocol, whereas communication with the site controller SC is via cables CC.

The HUB base station HBS incorporates space diversity to minimize fading problems and to improve signal quality. Thus, it includes two antennas 21, 22 each connected to a transceiver 23, 24 coupled to a microcontroller 25. The data is received from both antennas 21, 22. Microcontroller 25 selects the antenna and the transceiver providing the better-quality signal, and the channel of that signal is used for communication with the site controller SC.

The RF transceivers 23, 24 transmit and receive the data from the nozzle units NOZ at a main frequency of 433 MHz with FSK modulation. A digital synthesizer 26 generates frequencies for the frequency hopping mechanism.

Each channel includes a USART unit 23a, 24a, respectively, providing serial synchronous communication with the RF link. Each channel further includes a bit sync unit 23b, 24b, which provides clock recovery from the received information and improves the received signal quality.

Microcontroller 25 consists of a single board controller. It controls and upgrades all procedures in the HUB base station HBS and communicates with all the nozzles by filling the RF communication frame. Microcontroller 25 also communicates with the site controller SC via an UART unit 27 to provide serial asynchronous bi-directional communication with the site controller.

### The Frame Structure

As indicated earlier, the bi-directional communication of the digital data is in frames. FIG. 6 illustrates an example of a preferred frame structure.

As shown in FIG. 6, each frame is 0.5 seconds in length, and is divided into two sub-frames of 250 mS each. Each sub-frame is in turn divided into 23 mini-frames (1 - 23), two sync slots (S,Sx), and one control slot (C).

As further shown in FIG. 6, each mini-frame is in turn divided as follows:
- 2 x 200 bit: UL (uplink) slots
- 1 x 16 bit: UL slot
- 8 bit: Transmit/Receive switch delay
- 1 x 120 bit: DL (downlink) slot
- 1 x 16 bit: DL slot
- 8 bit: Transmit/Receive switch delay

The data rate is approximately 87 KB/sec in this example.

### The Synchronization Process

There are four frequencies dedicated to synchronization, these frequencies changing every 250 mS. The HUB base station HBS transmits the synchronous information four times in a sub-frame at the four previously-known frequencies f₁ - f₄. the nozzle unit NOZ hops from frequency f₁ - f₄ every 250 mS, and checks to see if there is a correlation between its frequency and The correlation pattern of the received signal. When such a correlation is detected, the correlator in the respective nozzle (12a, FIG. 3), generates a correlation word. A check is made of the presence of the CRC word at the received sync slot (S. FIG. 6). The LOCATE and FREQ fields are decoded at the sync slot.

The control slot (C, FIG. 6) is allocated to the channel open with respect to the MASK field. A request is transmitted for the use of a channel from the HUB base station HBS plus the identified nozzle NOZ, and a response is received from the HUB base station. Such a response would be ACK, to acknowledge receipt of the transmission, or NACK, to inform of the non-receipt of the transmission.

### Slots Structure

The control slot (C) in each sub-frame (FIG. 6) is used to provide the frequencies of the next six sub-frames in the frequency-hopping system. This information is available also at the sync slots (S,S, FIG. 6). but is placed in the control slot (C) to avoid the need to change the frequency inside a sub-frame after synchronization is achieved.

The slow SLW slots illustrated in the mini-frame of FIG. 6 are used to keep a "hot link" between the nozzle unit NOZ and the HUB base station HBS. The SLW slot in each mini-frame also contains the status information and other communication parameters regarding the vehicle unit VU. As further shown in FIG. 6, the SLW UL slot is followed by an ACK UL slot which provides acknowledge (ACK or NACK) information for the last uplink slots in order reduce system response time.

Following is a preferred example of a slot structure for all the slots illustrated in FIG. 6:

### Slots Structure

| *UL Slot 3.05 mS* = *264 bits* | | | | | |
|---|---|---|---|---|---|
| Guard | F.Correlator | I.D. | Comm Rpt | Data | CRC |
| 4 | 24 | 7 | 13 | 200 (25 Byte) | 16 |

| *DL Slot 2.13 mS* = *184 bits* | | | | | |
|---|---|---|---|---|---|
| Guard | F.Correlator | I.D. | Comm Ctrl | Data | CRC |
| 4 | 24 | 7 | 13 | 120 (15 Byte) | 16 |

| *Slow DL Slot 1.01 mS* = *88 bits* | | | | | |
|---|---|---|---|---|---|
| Guard | F.Correlator | I.D. | Comm | Data | CRC |
| 4 | 24 | 7 | 13 | 24 (3 Byte) | 16 |

| *Slow UL Slot 0.92 mS* = *80 bits* | | | | | |
|---|---|---|---|---|---|
| Guard | F.Correlator | I.D. | Comm | Data | CRC |
| 4 | 24 | 7 | 13 | 16 (2 Byte) | 16 |

| *Ack UL Slot 1.01 mS* = *88 bits* | | | | |
|---|---|---|---|---|
| Guard | F.Correlator | I.D. | Ack report | CRC |
| 4 | 24 | 7 | 13 | 16 |

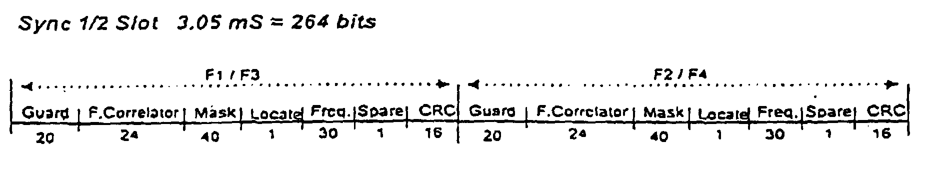

| *Control Slot 1.92 mS = 166 bits* | | | | | | | |
|---|---|---|---|---|---|---|---|
| Guard | F.Correlator | Locate | Comm Rpt | Frequency | Frame no | Spare | CRC |
| 20 | 24 | 1 | 13 | 30 | 12 | 50 | 16 |

### Operation

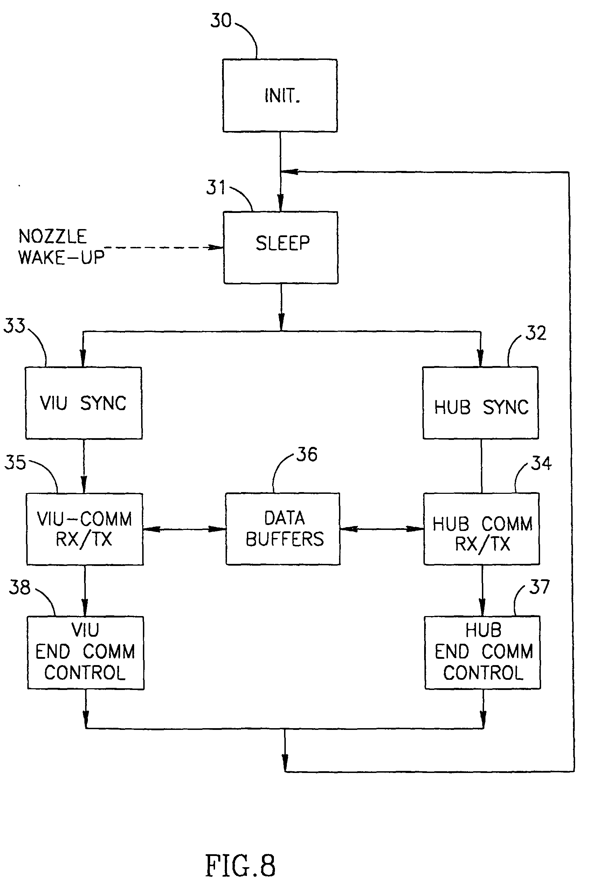

FIG. 8 is a flow chart illustrating the operation of the remote nozzle unit NOZ.

As shown, when the power supply is electrically connected, the system is initialized (block 30), and the nozzles are normally in the sleep mode (block 31).

A nozzle wake-up signal can be produced by the movement sensor 13 (FIG. 3) or by the ten minute timer 14, when received the nozzle unit NOZ is activated to the operational (communication) mode. In this mode, it synchronizes itself with the HUB base station (block 32), and, in parallel, with the vehicle unit VU on the vehicle (block 33), which station and unit are working all the time.

Once synchronization is achieved, the nozzle unit NOZ establishes bi-directional communication with the HUB base station HBS (block 34) and with the vehicle unit VU (block 35), utilizing data buffers in the processors of the nozzle unit and base station for this purpose (block 36).

The transfer of data between the nozzle units Noz₁-----NOZₙ and the HUB base station HBS (FIG. 1) is effected by a time-division protocol using the frame structure and synchronization processes described above with respect to FIGS. 6 and 7. Thus, the uplink (UL) slots are for data transfer from the nozzle unit to the HUB base station; and the downlink (DL) slots are for data transfer from the HUB base station to the nozzle units. Most of the data being transferred in this bi-directional communication path via the shared wireless communication channel (SWC, FIG. 1) will be in the form of data packets of non-uniform lengths for the various nozzle units. Therefore, the transmission of this data will be according to the above-described Slotted ALOHA time-division protocol, in which each nozzle unit transmits its accumulated data at the beginning of the next UL slot, (FIG. 6), and then waits to receives an ACK on the next DL SLW slot. If an ACK is not received, the nozzle unit will retransmit the data at the beginning of another UL slot, and so on until an ACK is received.

Some data, however, is of a length which is relatively uniform with respect to all the nozzle units. Such data could include not only ACK information, but also other information, e.g., the identification of the respective vehicle unit VU. Since this data is relatively uniform in length for all the nozzle units, this data is transmitted in the UL SLW (uplink "slow") or DL SLW (downlink "slow") slots according to the TDMA protocol with each user being allocated a dedicated time slot in the shared wireless communication channel (SWC).

The described system thus obtains many of the advantages of the TDMA time-division protocol with respect to data packets of relative uniform length, and the advantages of the Slotted ALOHA time division protocol with respect to data packets of relatively non-uniform length.

At the end of the transmission, the bi-directional communication is terminated between the nozzle with the HUB base station (block 37), by a "Terminate" command from the base station, and with the vehicle unit VU (block 38) by The RSSI signal generated by the FSK receiver 4b (FIG. 3) of the nozzle unit from the VU unit of the vehicle indicating that the vehicle is no longer present at the dispensing nozzle.

When the nozzle is returned to its normal holder, the nozzle unit NOZ then returns to its Sleep mode to await another activation.

Further details of the nozzle / HUB communication procedure are set forth in the following Table:

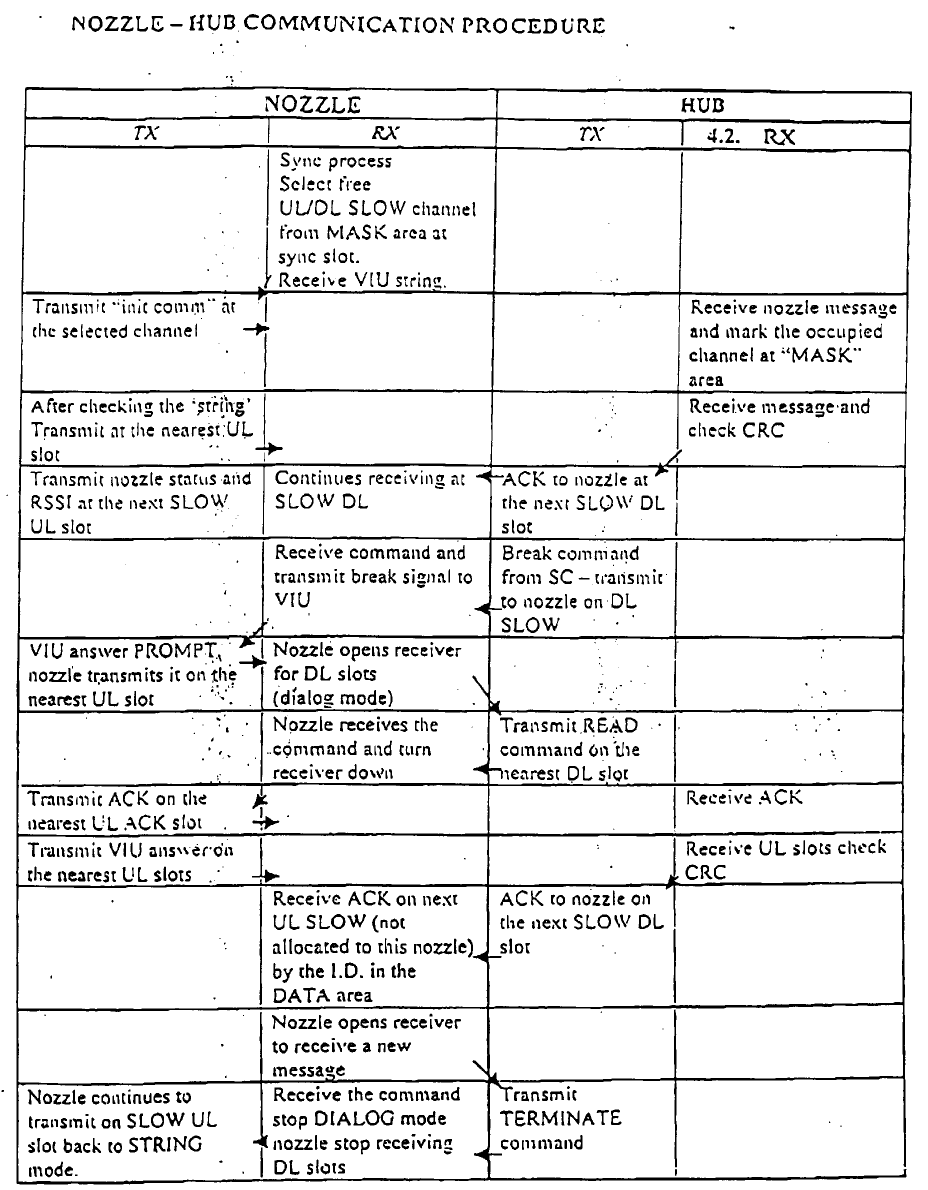

It will thus be seen that the described apparatus establishes a bi-directional communication via a shared wireless channel between a plurality of nozzle units NOZ as and when coupled to a vehicle unit VU on the vehicle, and the HUB base station HBS at the gasoline station where the fuel is being dispensed from a plurality of dispensing pumps. The information to be transmitted from the vehicle units VU would include vehicle identification data and other data that may be appropriate to charge the customer's bank account. In addition, it could include other data that may be desirable to be provided for record purposes, such as the vehicle's odometer reading, various data stored in a trip recorder, and the like. This data is recorded and processed by the HUB base station with the data regarding the quantity of fuel pumped, the date pumped, the cost of the fuel, and any other data that may be desirable for charging the user, and/or for other record purposes. The HUB base station may also transmit selected parts of this data to the vehicle via the respective vehicle unit and nozzle unit.

The example described herein can serve up to 40 users simultaneously out of up to 128 refueling nozzles installed at a gas station.

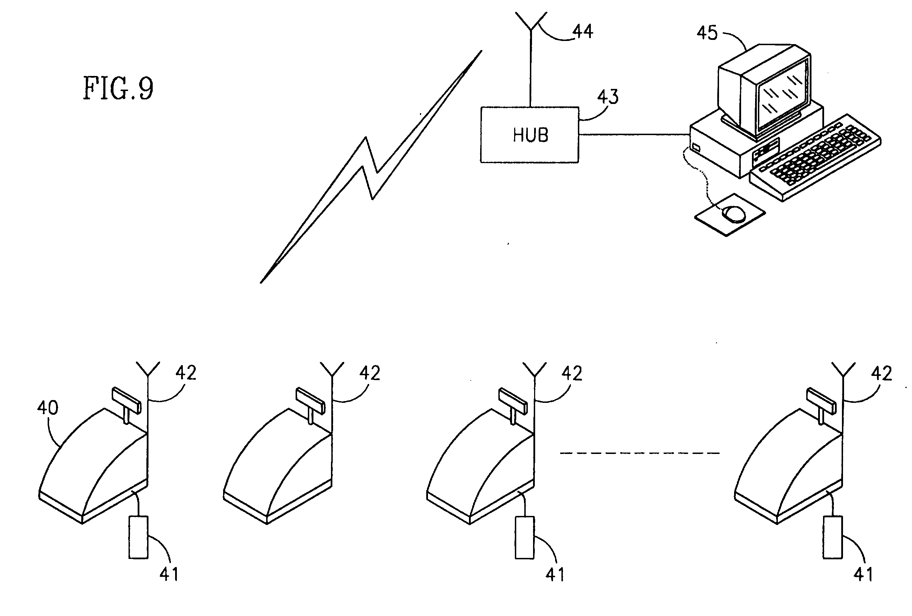

While the invention has been described above particularly with respect to an automatic-charge refueling system, it will be appreciated that the invention could be used in many other applications involving the bi-directional transmission of data between a plurality of users and a central base or station using a shared communication channel and a time-division protocol. For example, such a system could be used in other points-of-sale applications, such as in supermarkets, check-out counters. FIG. 9 illustrates an example of such an application including a plurality of cash registers 40 at various check-out counters in a supermarket, each having a wire-connected (or wireless) bar-code reader 41, and each equipped with an antenna 42 providing bi-directional communication with a HUB base station, via its antenna 44, wire-connected to a site controller 45.

It will be appreciated by persons skilled in the art that the present invention is not limited by what has been particularly shown and described herein above. Many other variations, modifications and applications of the invention will be apparent. Rather the scope of the invention is defined by the claims which follow:

## Claims

1. A method of bi-directional communication of digital data between a plurality of remote users and a base station using a shared communication channel and a time-division protocol in which the communication time is divided into a plurality of time slots, comprising:
transmitting packets of data according to a TDMA (Time Division Multiple Access) protocol in which each user is allocated a dedicated time slot in the shared communication channel;
and transmitting other packets of data according to a time-division ALOHA protocol in which each user is allocated a time slot in the shared communication channel on an "as needed" basis, competing with other users for access to the shared communication channel, and subsequently re-transmits those packets of data where no acknowledgement is received until an acknowledgement is received.

2. The method according to claim 1, wherein said data packets transmitted according to a TDMA protocol are of relatively uniform lengths among the users, and said data packets transmitted according to a time division ALOHA protocol are of relatively non-uniform lengths among the users.

3. The method according to either of claims 1 or 2, wherein said data packets transmitted according to a time-division ALOHA protocol are transmitted according to a slotted ALOHA protocol in which each transmission is at the beginning of a time slot in the shared communication channel.

4. The method according to any one of claims 1 - 3, wherein the data transmissions are in frames each including a plurality of time slots for transmitting data, and at least one sync slot for synchronizing the transmission between the user and the base station.

5. The method according to claim 4, wherein said shared communication channel is a wireless channel, and the data transmissions are according to a frequency-hopping system, each of said frames further including a control slot for specifying the frequencies of the following frames.

6. The method according to claim 5, wherein each frame is divided into a plurality of miniframes, each miniframe including:
an uplink data slot for use by a user to transmit data to the base station;
a downlink data slot for use by the base station to transmit data to a user;
and an ACK slot for acknowledging receipt of an uplink transmission during the preceding miniframe.

7. The method according to claim 6,
wherein said uplink and downlink data slots are allocated to the user on an "as needed" basis according to the slotted ALOHA time-division protocol, for transmitting variable length data packets;
and wherein each miniframe further includes a Slow uplink data slot and a Slow downlink data slot allocated to the users on a "dedicated" basis according to the TDMA protocol for transmitting fixed-length data packets.

8. The method according to claim 7, wherein each miniframe further includes two uplink data slots allocated to the users according to the slotted ALOHA time division protocol.

9. The method according to any one of claims 1 - 8, wherein each user is a remote point-of-sales device including a transmitter for transmitting data from the point-of-sales to the base station, and a receiver for receiving data at that point-of-sales from said base station.

10. The method according to claim 9, wherein said remote point-of-sale device is a nozzle unit attached to a nozzle of a fuel dispenser and adapted to be coupled to a vehicle unit for transmitting to the base station, from the vehicle unit, data including the identification of the vehicle.

11. The method according to claim 10, wherein said nozzle unit is normally held in a holder in a sleep mode and is activated to an operational mode by a wake-up signal produced by physically removing the nozzle from its holder, said nozzle unit, when activated to an operation mode, first synchronizing itself with the base station and with the vehicle unit, before transmitting data to, or receiving data from, said base station.

12. The method according to claim 11, wherein said wake-up signal is also produced automatically at predetermined time intervals.

13. A method of bi-directional communication between a plurality of nozzle units each attached to the nozzle of a fuel dispenser, and a plurality of vehicle units each attached to a vehicle to be refueled, and a base station, comprising:
providing bi-directional communication between the plurality of nozzle units, the plurality of vehicle units, and said base station via a shared wireless communication channel operated according to a time-division protocol in which the communication time is divided into a plurality of time slots;
normally maintaining each nozzle unit in a sleep mode until activated to an operational mode by a wake-up signal produced by physically removing the nozzle from its holder;
and when activated to the operational mode, first synchronizing said nozzle unit, with the base station and with the vehicle unit to which it is coupled, and then transmitting data from the vehicle unit to the base station, and from the base station to the vehicle unit via said shared wireless communication channel and nozzle units.

14. The method according to claim 13, wherein said wake-up signal is also produced automatically at predetermined time intervals.

15. The method according to either of claims 13 or 14, wherein the time-division protocol is according to any of claims 1 - 8.

16. Apparatus for bi-directional communication of digital data, comprising:
a plurality of remote user devices each including a transmitter, a receiver, and a processor;
and a base station including a transmitter, receiver and processor;
said processors controlling their respective transmitters and receivers to use a shared communication channel and a time-division protocol in which the communication time is divided into a plurality of time slots, in which:
packets of data are transmitted according to a TDMA (Time Division Multiple Access) protocol in which each user device is allocated a dedicated time slot in the shared communication channel; and
other packets of data are transmitted according to a time-division ALOHA protocol in which each user is allocated a time slot in the shared communication channel on an "as needed" basis, competing with other user devices for access to the shared communication channel, and subsequently re-transmits those packets of data where no acknowledgement is received until an acknowledgement is received.

17. The apparatus according to claim 16, wherein said data packets transmitted according to a TDMA protocol are of relatively uniform lengths among the users, and said data packets transmitted according to a time division ALOHA protocol are of relatively non-uniform lengths among the users.

18. The apparatus according to either of claims 16 or 17, wherein said data packets transmitted according to a time-division ALOHA protocol are transmitted according to a slotted ALOHA protocol in which each transmission is at the beginning of a time slot in the shared communication channel.

19. The apparatus according to any one of claims 16 - 18, wherein the data transmissions are in frames each including a plurality of time slots for transmitting data, and at least one sync slot for synchronizing the transmission between the user and the base station.

20. The apparatus according to claim 19, wherein said shared communication channel is a wireless channel, and the data transmissions are according to a frequency-hopping system, each of said frames further including a control slot for specifying the frequencies of the following frames.

21. The apparatus according to claim 20, wherein each frame is divided into a plurality of miniframes, each miniframe including:
an uplink data slot for use by a user to transmit data to the base station;
a downlink data slot for use by the base station to transmit data to a user;
and an ACK slot for acknowledging receipt of an uplink transmission during the preceding miniframe.

22. The apparatus according to claim 21,
wherein said uplink and downhink data slots are allocated to the user on an "as needed" basis according to the slotted ALOHA time-division protocol, for transmitting variable length data packets;
and wherein each miniframe further includes a Slow uplink data slot and a Slow downlink data slot allocated to the users on a "dedicated" basis according to the TDMA protocol for transmitting fixed-length data packets.

23. The apparatus according to claim 22, wherein each miniframe further includes two uplink data slots allocated to the users according to the slotted ALOHA time division protocol.

24. The apparatus according to any one of claims 16 - 23, wherein each user is a remote point-of-sales device including a transmitter for transmitting data from the point-of-sales to the base station, and a receiver for receiving data at that point-of-sales from said base station.

25. The apparatus according to claim 24, wherein said remote point-of-sale device is a nozzle unit attached to a nozzle of a fuel dispenser and adapted to be coupled to a vehicle unit for transmitting to the base station, from the vehicle unit, data including the identification of the vehicle.

26. The apparatus according to claim 25, wherein said nozzle unit is normally held in a holder in a sleep mode and is activated to an operational mode by a wake-up signal produced by physically removing the nozzle from its holder; said nozzle unit, when activated to an operational mode, first synchronizing itself with the base station and with the vehicle unit, before transmitting data to, or receiving data from, said base station.

27. The apparatus according to claim 26, wherein said wake-up signal is also produced automatically at predetermined time intervals.

28. Apparatus for producing bi-directional communication between a plurality of nozzle units each attached to the nozzle of a fuel dispenser, a plurality of vehicle units each attached to a vehicle to be refueled, and a site controller, comprising:
a base station having bi-directional wire communication with said site controller, and bi-directional communication with the plurality of nozzle units via a shared wireless communication channel operated according to a time-division protocol in which the communication time is divided into a plurality of time slots;
said nozzle units and base station including processors programmed:
normally to maintain each nozzle unit in a sleep mode until activated to an operational mode by a wake-up signal produced by physically removing the nozzle from its holder;
and when activated to the operational mode, first to synchronize said nozzle unit, with the base station and with the vehicle unit to which it is coupled, and then to transmit data from the vehicle unit to the base station, and from the base station to the vehicle unit via said shared wireless communication channel and nozzle units.

29. The apparatus according to claim 28, wherein said processor of the base station further includes a timer which also produces said wake-up signal automatically at predetermined time intervals.

30. The apparatus according to either of claims 28 or 29, wherein the time-division protocol is according to any of claims 16 - 23.
